(19) Europäisches Patentamt
European Patent Office
Office européen des brevets

(11) Veröffentlichungsnummer: **0 542 078 A1**

# (12) EUROPÄISCHE PATENTANMELDUNG

(21) Anmeldenummer: **92118735.7**

(22) Anmeldetag: **02.11.92**

(51) Int. Cl.5: **C08K 5/00**, C08L 53/00, A01N 25/10

(30) Priorität: **13.11.91 DE 4137272**

(43) Veröffentlichungstag der Anmeldung:
**19.05.93 Patentblatt 93/20**

(84) Benannte Vertragsstaaten:
**AT BE CH DE DK ES FR GB GR IE IT LI LU NL PT SE**

(71) Anmelder: **BAYER AG**

**W-5090 Leverkusen 1 Bayerwerk(DE)**

(72) Erfinder: **Brandt, Heinz-Dieter, Dr.**
**Buschstrasse 169**
**W-4150 Krefeld(DE)**
Erfinder: **Dhein, Rolf, Dr.**
**Deswatinesstrasse 30**
**W-4150 Krefeld(DE)**
Erfinder: **Hugl, Herbert, Dr.**
**Gemarkenweg 9**
**W-5060 Bergisch Gladbach 2(DE)**
Erfinder: **Hackemüller, Doris, Dr.**
**Norfer Strasse 19**
**W-4000 Düsseldorf 1(DE)**
Erfinder: **Stendel, Wilhelm, Dr.**
**In den Birken 55**
**W-5600 Wuppertal 1(DE)**

## (54) Wirkstoffhaltige Formkörper auf Basis thermoplastisch verarbeitbarer elastomerer Styrol-Butylen-Blockcopolymerer, Verfahren zu ihrer Herstellung und Verwendung zur Kontrolle von Schädlingen.

(57) Gegenstang der vorliegenden Erfindung sind wirkstoffhaltige Formkörper, die dadurch gekennzeichnet sind, daß sie als Träger thermoplastisch elastomere Styrol-Butylen-Blockcopolymere gegebenenfalls neben üblichen Zusätzen enthalten, Verfahren zu ihrer Herstellung und ihre Verwendung der Kontrolle von Schädlingen bei Tieren.

EP 0 542 078 A1

Die vorliegende Erfindung betrifft neue wirkstoffhaltige Formkörper auf Basis thermoplastisch verarbeitbarer elastomerer Styrol-Butylen-Blockcopolymerer, deren Herstellung und deren Verwendung zur Kontrolle von Schädlingen, insbesondere bei Nutz- und Haustieren.

Formkörper, die Wirkstoffe zur Kontrolle von Schädlingen enthalten, sind bekannt. Sie basieren auf der langsamen Freisetzung von Wirkstoffen aus einer wirkstoffhaltigen Trägermatrix von Kunststoffen (vergleiche z.B. Aries et al US P 3 814 061, Greenberg US-P 3 918 407, Miller et al US-P 3 944 662, Millionis et al US-P 4 041 151, Pasarela US-P 4 145 409, Greenberg und Cloud US-P 4 158 051, v. Bittera et al US-P 4 225 578. McDaniel et al EP-OS 0 052 411, Grubb et al US-P 3 852 416 und Pearce US-P 4 536 388).

Der bei bekannten Formkörpern praktisch fast ausschließlich eingesetzte Träger ist PVC. Andere Träger werden in der Literatur zwar erwähnt, haben aber bis jetzt keinen Eingang in die Praxis gefunden. So wird in US-P 4 195 075 unter anderem erwähnt, daß als Trägerpolymere für Ohrmarken auch thermoplastische Elastomere in Frage kommen. Auch in diesem Zitat werden jedoch ausschließlich Beispiele mit weichmacherhaltigem PVC als Trägerpolymer beschrieben.

Dies ist auch nicht erstaunlich. PVC ist preiswert und leicht zugänglich. Es ist auch in breiten Bereichen mit anderen Stoffen, insbesondere Weichmachern, mischbar. Diese Weichmacher haben bei wirkstoffhaltigen PVC-Körpern die Funktion den Wirkstoff im Träger gelöst zu halten und ihn langsam an die Körperoberfläche zu transportieren. Dort verdampft der Wirkstoff oder er wird zusammen mit dem Weichmacher von der Oberfläche abgerieben. Das Zusammenwirken der drei Komponenten PVC-Träger, Weichmacher und Wirkstoff bestimmt ob und wieweit der Formkörper praktisch einsetzbar ist.

Wird eine Komponente des Gesamtsystems geändert, läßt sich nicht mehr vorhersehen, ob das System in der Praxis noch wirkt. Dies trifft besonders zu, falls der Weichmacher, dem ja beim Wirkstofftransport eine Schlüsselfunktion zukommt, geändert oder weggelassen wird.

Aus verschiedenen Gründen ist es wünschenswert PVC als Trägermaterial zu ersetzen. Auch ist es vorteilhaft auf den Einsatz von Weichmachern teilweise oder ganz zu verzichten. Es galt daher ein Wirkstoff-Formkörper-System zu finden bei dem auf PVC als Trägermaterial sowie auf Weichmacher verzichtet werden kann und das dennoch in der Praxis gut wirksam ist.

Thermoplastische Elastomere sind Werkstoffe, die elastomere Phasen in thermoplastisch verarbeitbaren Polymeren entweder physikalisch eingemischt oder chemisch eingebunden enthalten, Man unterscheidet Polyblends in denen die elastomeren Phasen physikalisch eingemischt vorliegen und Block-Copolymere in denen die elastomeren Phasen Bestandteil des polymeren Gerüsts sind, Durch den Aufbau der thermoplastischen Elastomere liegen harte und weiche Bereiche nebeneinander vor. Die harten Bereiche bilden dabei eine kristalline Netzstruktur oder eine kontinuierliche Phase deren Zwischenräume von elastomeren Segmenten ausgefüllt sind. Aufgrund dieses Aufbaus haben diese Werkstoffe kautschukähnliche Eigenschaften.

Man kann 5 Hauptgruppen der thermoplastischen Elastomere unterscheiden:

1. Copolyester
2. Polyether-Block-Amide (PEBA)
3. Thermoplastische Polyurethane (TPU)
4. Thermoplastische Polyolefine (TPO)
5. Styrol-Block Copolymere

Diese 5 Hauptgruppen zeigen bei chemisch völlig unterschiedlichem Aufbau gleichartige makroskopisch physikalische Eigenschaften. Trotz dieser makroskopisch gleichartigen Eigenschaften verhalten sich diese Hauptgruppen bei der Einmischung und Freisetzung von Wirkstoffen völlig unterschiedlich.

Die Verwendung von thermoplastischen Elastomeren auf Basis von Copolymeren als Träger für Wirkstoffe ist bekannt. In EP-OS 338 821 wird die Verwendung von Styrol-Butadien-Block-Copolymeren als Träger beschrieben. In EP-OS 338 732 wird die Verwendung von Polyurethan-Polydisiloxan-Copolymeren als Träger beschrieben.

Gegenstand der vorliegenden Erfindung sind

1. Wirkstoffhaltige Formkörper, dadurch gekennzeichnet, daß sie als Träger thermoplastische Elastomere auf Basis von Styrol-Butylen-Blockcopolymeren gegebenenfalls neben üblichen Zusätzen enthalten.
2. Verfahren zur Herstellung wirkstoffhaltiger Formkörper, dadurch gekennzeichnet, daß man thermoplastische Elastomere auf Basis von Styrol-Butylen-Blockcopolymeren mit Wirkstoffen und gegebenenfalls üblichen Zusätzen vermischt und in üblicher Weise verarbeitet.

Es war überraschend, daß Wirkstoffe ohne Zusatz von Weichmachern auch aus thermoplastischen Elastomeren auf Basis Styrol und Butylen aus der Polymermatrix an die Polymeroberfläche gelangen, da diese Fähigkeit nur auf ganz wenige Polymere beschränkt ist` Ändert man nur eine Komponente des Gesamtsystems, so sind die Auswirkungen nicht vorhersehbar. Thermoplastische Elastomere auf Basis thermoplastischer Olefine (TPO) oder thermoplastischer Polyurethane sind z.B. nicht in der Lage, Wirkstoffe

an die Oberfläche migrieren zu lassen.

Die erfindungsgemäß verwendbaren Styrol-Butylen-Blockcopolymere bestehen aus einem Polyethylenbutylen-Kautschuk-Mittelblock mit einem an beiden Enden chemisch gekoppelten Polystyrol-Endblock. Der Polystyrolanteil beträgt weniger als 30 %. Die Polystyrolendblöcke verteilen sich gleichmäßig als sphärische Polystyroldomänen in der Ethylenkautschuk-Matrix.

Verfahren zur Synthese geeigneter Styrol-Block-Copolymerer sind z.B. aus den US-P 3 485 787, 4 006 116 und 4 039 629 bekannt.

Geeignete Styrol-Butylen-Block-Copolymere sind z.B. unter den Handelsnamen ®Kraton G und ®Elexar der Fa. Shell Chemie GmbH und ®Thermolast-K-Compounds der Fa. Kraiburg erhältlich.

Als Wirkstoffe für die erfindungsgemäßen Formkörper seien bevorzugt Insektizide insbesondere Parasitizide zur Verwendung an Tieren genannt. Zu den Insektiziden gehören phosphorhaltige Verbindungen wie Phosphor- oder Phosphonsäureester, natürliche und synthetische Pyrethroide, Carbamate, Amidine, Juvenilhormone und juvenoide synthetische Wirkstoffe.

Zu den Phosphor- oder Phosphorsäureestern gehören:

0-Ethyl-0-(8-chinolyl)phenyl-thiophosphat (Quintiofos),
0,0-Diethyl-O-(3-chloro-4-methyl-7-coumarinyl)-thiophosphat (Coumaphos),
0,0-Diethyl-0-phenylglyoxylonitril-oxim-thiophosphat (Phoxim),
0,0-Diethyl-0-cyanochlorbenzaldoxim-thiophosphat (Chlorphoxim),
0,0-Diethyl-0-(4-bromo-2,5-dichlorophenyl)-phosphorothionat (Bromophos-ethyl),
0,0,0',0'-Tetraethyl-S,S'-methylene-di(phosphorodithionat) (Ethion),
2,3-p-Dioxanedithiol-S,S-bis(0,0-diethylphosphorodithionat,
2-Chlor-1-(2,4-dichlorphenyl)-vinyldiethylphosphat (Chlorfenvinphos),
0,0-Dimethyl-0-(3-methyl-4-methylthiophenyl)-thionophosphorsäureester (Fenthion).

Zu den Carbamaten gehören:

2-Isopropoxyphenylmethylcarbamat (Propoxur),
1-Naphthyl-N-methylcarbamat (Carbaryl).

Zu den synthetischen Pyrethroiden zählen Verbindungen der Formel I

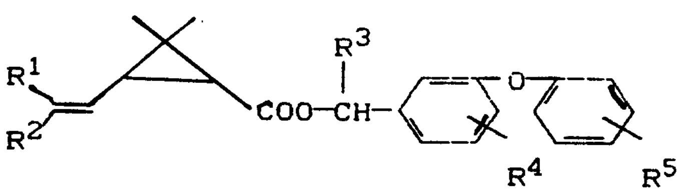

Formel I

in welcher

$R^1$ und $R^2$ für Halogen, gegebenenfalls halogensubstituiertes Alkyl, gegebenenfalls halogensubstituiertes Phenyl stehen,
$R^3$ für Wasserstoff oder CN steht,
$R^4$ für Wasserstoff oder Halogen steht,
$R^5$ für Wasserstoff oder Halogen steht,

Bevorzugt sind synthetische Pyrethroide der Formel I in welcher

$R^1$ für Halogen, insbesondere Fluor, Chlor, Brom steht,
$R^2$ für Halogen, insbesondere Fluor, Chlor, Brom, Trihalogenmethyl, Phenyl, Chlorphenyl steht,
$R^3$ für Wasserstoff oder CN steht,
$R^4$ für Wasserstoff oder Fluor steht,
$R^5$ für Wasserstoff steht.

Besonders bevorzugt sind synthetische Pyrethroide der Formel I in welcher

$R^1$ für Chlor steht,
$R^2$ für Chlor, Trifluormethyl, p-Chlorphenyl steht,
$R^3$ für CN steht,
$R^4$ für Wasserstoff oder Fluor steht,
$R^5$ für Wasserstoff steht.

Insbesondere seien Verbindungen der Formel I genannt in welcher

$R^1$ für Chlor steht,
$R^2$ für Chlor oder p-Chlorphenyl steht,
$R^3$ für CN steht,

$R^4$ für Fluor in 4 – Stellung steht,
$R^5$ für Wasserstoff steht.

Im Einzelnen seien genannt:

3 – [2 – (4 – Chlorphenyl ) – 2 – chlorvinyl] – 2,2 – dimethyl – cyclopropancarbonsäure [(α – cyano – 4 – fluor – 3 – phenoxy) – benzyl] – ester (Flumethrin),

2,2 – Dimethyl – 3 – (2,2 – dichlorvinyl) – cyclopropancarbonsäure – α – cyano(4 – fluor – 3 – phenoxy) – benzyl – ester (Cyfluthrin) und seine Enantiomere und Stereoisomere,

α – Cyano – 3 – phenoxybenzyl(±) – cis, trans – 3 – (2,2 – dibromvinyl) – 2,2 – dimethylcyclopropancarboxylat (Deltamethrin),

2,2 – Dimethyl – 3 – (2,2 – dichlorvinyl) – cyclopropancarbonsäure – α – cyano – 3 – phenoxybenzylester (Cypermethrin),

3 – Phenoxybenzyl(±) – cis, trans – 3 – (2,2 – dichlorvinyl) – 2,2 – dimethylcyclopropancarboxylat (Permethrin),

α – (p – Cl – phenyl) – isovaleriansäure – α – cyano – 3 – phenoxy – benzylester (Fenvalerate),

2 – Cyano – 3 – phenoxybenzyl – 2 – (2 – chlor – α,α,α – trifluor – p – toluidino) – 3 – methylbutyrat (Fluvalinate).

Zu den Amidinen gehören:

3 – Methyl – 2 – [2,4 – dimethyl – phenylimino] – thiazolin
2 – (4 – Chlor – 2 – methylphenylimino) – 3 – methylthiazolidin
2 – (4 – Chlor – 2 – methylphenylimino) – 3 – (isobutyl – 1 – enyl) – thiazolidin
1,5 – Bis – (2,4 – dimethylphenyl) – 3 – methyl – 1,3,5 – triazapenta – 1,4 – dien (Amitraz).

Zu den Juvenilhormonen oder juvenilhormonartigen Substanzen gehören substituierte Diarylether, Benzoylharnstoffe und Triazinderivate. Zu den Juvenilhormonen und juvenilhormonartigen Substanzen gehören insbesondere Verbindungen der folgenden Formeln:

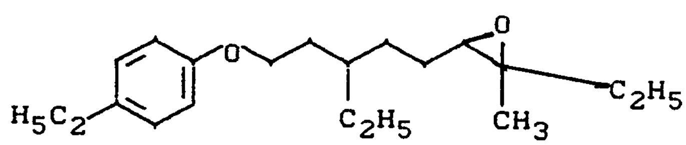

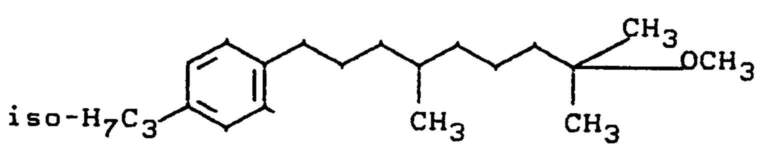

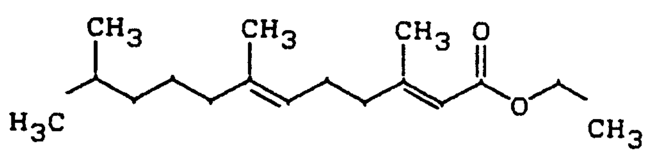

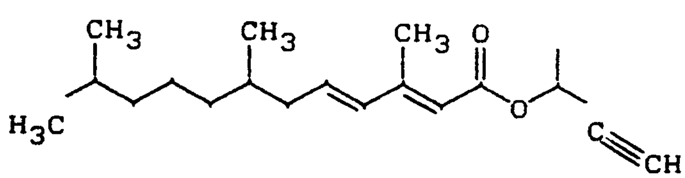

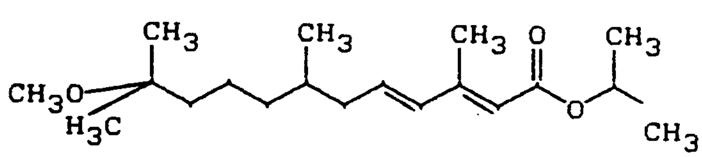

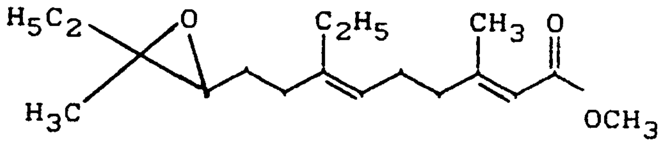

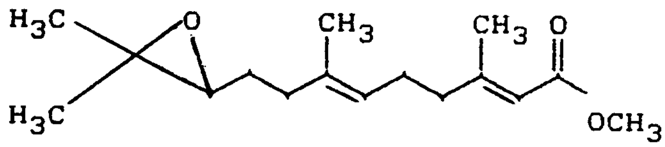

Zu den substituierten Diarylethern gehören insbesondere substituierte Alkoxydiphenylether oder -diphenylmethane der allgemeinen Formel I

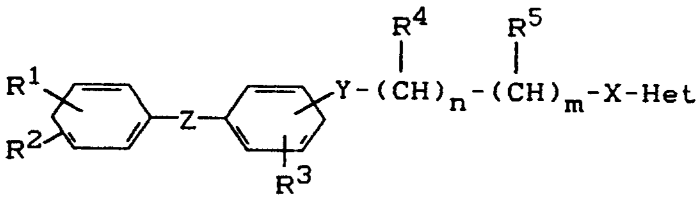 (I)

wobei

- $R^1$ für Wasserstoff, Halogen, Alkyl, Alkoxy, Alkylthio, Halogenalkyl, Halogenalkoxy, Halogenalkylthio, Dioxyalkylen, Dioxyhalogenalkylen, CN, $NO_2$, Alkenyl, Alkinyl, Alkoxyalkyl, Alkoxyalkoxy, Hydroxyalkoxy steht,
- $R^2$ für die bei $R^1$ angegebenen Reste steht,
- $R^3$ für die bei $R^1$ angegebenen Reste steht,
- $R^4$ für Wasserstoff, Alkyl, Halogenalkyl oder Halogen steht,
- $R^5$ für die bei $R^4$ angegebenen Reste steht,
- Het für gegebenenfalls substituiertes Heteroaryl steht das nicht über das Heteroatom an den übrigen Rest gebunden ist,
- X, Y unabhängig voneinander für $-O-$, $-S-$ stehen
- Z für $-O-$, $-S-$, $-CH_2-$, $-CHCH_3-$, $-C(CH_3)_2-$ steht,
- m und n unabhängig voneinander für 0, 1, 2, 3 stehen ihre Summe aber gleich oder größer 2 ist.

Besonders bevorzugt sind Verbindungen der Formel I

in welcher

- $R^1$ Wasserstoff, Methyl, Trifluormethyl, Methoxy, Trifluormethoxy, Chlor, Fluor steht
- $R^2$ für Wasserstoff steht,
- $R^3$ für Wasserstoff, Fluor, Chlor, Methyl steht,
- $R^4$ für Wasserstoff oder Methyl steht,
- $R^5$ für Methyl, Ethyl, Trifluormethyl oder Wasserstoff steht,
- Het für Pyridyl oder Pyridazinyl steht die gegebenenfalls substituiert sind durch Fluor, Chlor, Methyl, $NO_2$, Methoxy, Methylmercapto,
- X für O steht,
- Y für O steht,
- Z für O, $CH_2$ oder $-C(CH_3)_2-$ steht,
- m für 1 steht,
- n für 1 steht.

Im einzelnen seien folgende Verbindungen genannt:

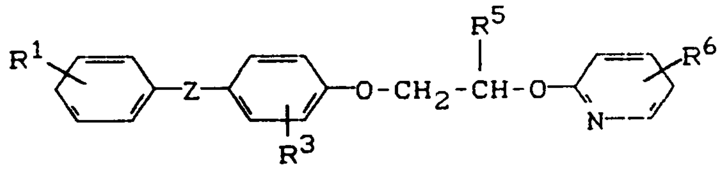

| $R^1$ | $R^3$ | $R^5$ | $R^6$ | Z |
|---|---|---|---|---|
| H | H | $CH_3$ | H | O |
| H | H | $CH_3$ | 2-Cl | O |
| 5-F | H | $CH_3$ | H | O |
| H | H | $CF_3$ | H | O |
| H | H | $C_2H_5$ | H | O |
| H | H | H | H | O |
| H | H | $CH_3$ | H | $CH_2$ |
| H | H | $CH_3$ | H | $C(CH_3)_2$ |

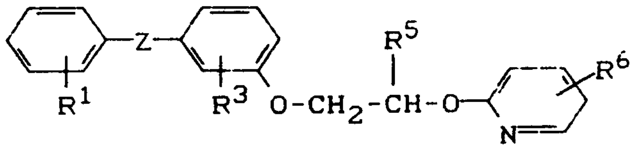

| $R^1$ | $R^3$ | $R^5$ | $R^6$ | Z |
|---|---|---|---|---|
| H | H | $CH_3$ | H | O |

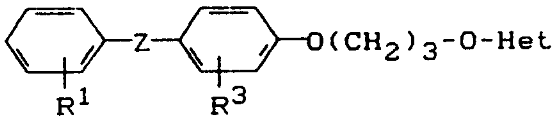

| $R^1$ | $R^3$ | Z | Het |
|---|---|---|---|
| H | H | O | 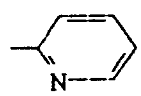 |
| H | H | O | 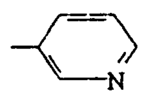 |
| H | H | O | 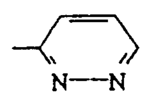 |

Zu den Benzoylharnstoffen gehören Verbindungen der Formel (V):

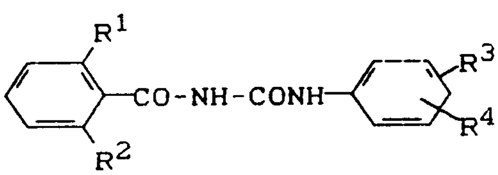

(V)

wobei

$R^1$ für Halogen steht,

$R^2$ für Wasserstoff oder Halogen steht,

$R^3$ für Wasserstoff, Halogen oder $C_{1-4}$ – Alkyl steht,

$R_4$ für Halogen, 1 – 5 – Halogen – $C_{1-4}$ – alkyl, $C_{1-4}$ – Alkoxy, 1 – 5 – Halogen – $C_{1-4}$ – alkoxy, $C_{1-4}$ – Alkylthio, 1 – 5 – Halogen – $C_{1-4}$ – alkylthio, Phenoxy oder Pyridyloxy die gegebenenfalls substi – tuier sein können durch Halogen, $C_{1-4}$ – Alkyl, 1 – 5 – Halogen – $C_{1-4}$ – alkyl, $C_{1-4}$ – Alkoxy, 1 – 5 – Halogen – $C_{1-4}$ – alkoxy, $C_{1-4}$ – Alkylthio, 1 – 5 – Halogen – $C_1$ – $C_4$ – alkylthio.

Insbesondere seien genannt:

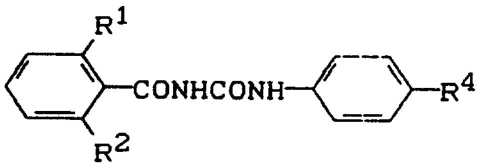

| $R^1$ | $R^2$ | $R^4$ |
|---|---|---|
| H | Cl | $CF_3$ |
| Cl | Cl | $CF_3$ |
| F | F | $CF_3$ |
| H | F | $CF_3$ |
| H | Cl | $SCF_3$ |
| F | F | $SCF_3$ |
| H | F | $SCF_3$ |
| H | Cl | $OCF_3$ |
| F | F | $OCF_3$ |
| H | F | $OCF_3$ |
| F | F | 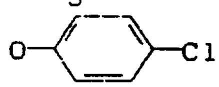 |
| F | F | 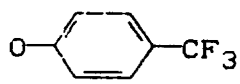 |
| F | F | 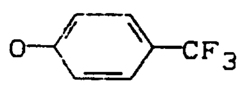 |

Zu den Triazinen gehören Verbindungen der Formel (VI)

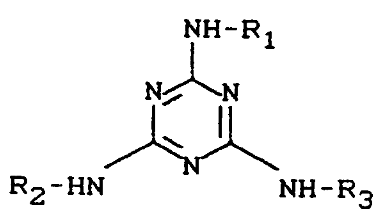

(VI)

worin

$R_1$ für Cyclopropyl oder Isopropyl steht;

$R_2$ Wasserstoff, Halogen, $C_1-C_{12}$-Alkylcarbonyl, Cyclopropylcarbonyl, $C_1-C_{12}$-Alklcarbamoyl, $C_1-C_{12}$-Alkylthiocarbamoyl oder $C_2-C_6$-Alkenylcarbamoyl bedeutet; und

$R_3$ für Wasserstoff, $C_1-C_{12}$-Alkyl, Cyclopropyl, $C_2-C_6$-Alkenyl, $C_1-C_{12}$-Alkylcarbonyl, Cyclopropylcarbonyl, $C_1-C_{12}$-Alkylcarbamoyl, $C_1-C_{12}$-Alkylthiocarbamoyl oder $C_2-C_6$-Alkenylcarbamoyl steht und deren Säureadditionssalze, die für Warmblüter untoxisch sind.

Insbesondere seien genannt:

| $R_1$ | $R_2$ | $R_3$ |
|---|---|---|
| Cyclopropyl | H | H |
| Cyclopropyl | H | $CH_3$ |
| Cyclopropyl | H | $C_2H_5$ |
| Cyclopropyl | H | $C_3H_7$-n |

(Fortsetzung)

| $R_1$ | $R_2$ | $R_3$ |
|---|---|---|
| Cyclopropyl | H | $C_4H_9$-n |
| Cyclopropyl | H | $C_5H_{11}$-n |
| Cyclopropyl | H | $C_6H_{13}$-n |
| Cyclopropyl | H | $C_7H_{15}$-n |
| Cyclopropyl | H | $C_8H_{17}$-n |
| Cyclopropyl | H | $C_{12}H_{25}$-n |
| Cyclopropyl | H | $CH_2$-$C_4H_9$-t |
| Cyclopropyl | H | $CH_2CH(CH_3)C_2H_5$ |
| Cyclopropyl | H | $CH_2CH=CH_2$ |
| Cyclopropyl | Cl | $C_2H_5$ |
| Cyclopropyl | Cl | $C_6H_{13}$-n |
| Cyclopropyl | Cl | $C_8H_{17}$-n |
| Cyclopropyl | Cl | $C_{12}H_{25}$-n |
| Cyclopropyl | H | Cyclopropyl |
| Cyclopropyl | H | $COCH_3$ |
| Cyclopropyl | H | $COCH_3 \cdot HCl$ |
| Cyclopropyl | H | $COC_2H_5 \cdot HCl$ |
| Cyclopropyl | H | $COC_2H_5$ |
| Cyclopropyl | H | $COC_3H_7$-n |
| Cyclopropyl | H | $COC_3H_7$-i |
| Cyclopropyl | H | $COC_4H_9$-t$\cdot HCl$ |
| Cyclopropyl | H | $COC_4H_9$-n |
| Cyclopropyl | H | $COC_6H_{13}$-n |
| Cyclopropyl | H | $COC_{11}$-$H_{23}$-n |
| Cyclopropyl | $COCH_3$ | $COC_2H_5$ |
| Cyclopropyl | $COC_3H_7$-n | $COC_6H_{13}$-n |
| Cyclopropyl | $COCH_3$ | $COC_3H_7$-n |

(Fortsetzung)

| $R_1$ | $R_2$ | $R_3$ |
|---|---|---|
| Cyclopropyl | $COC_2H_5$ | $COC_3H_7$-n |
| Cyclopropyl | H | COCyclopropyl |
| Cyclopropyl | COCylclopropyl | COCyclopropyl |
| Cyclopropyl | $COCH_3$ | $COCH_3$ |
| Isopropyl | H | H |
| Isopropyl | H | $COCH_3$ |
| Isopropyl | H | $COC_3H_7$-n |
| Cyclopropyl | H | $CONHCH_3$ |
| Cyclopropyl | H | $CONHC_3H_7$-i |
| Cyclopropyl | $CONHCH_3$ | $CONHCH_3$ |
| Cyclopropyl | H | $CSNHCH_3$ |
| Cyclopropyl | H | $CONHCH_2CH{=}CH_2$ |
| Cyclopropyl | $CONHCH_2CH{=}CH_2$ | $CONHCH_2CH{=}CH_2$ |
| Cyclopropyl | $CSNHCH_3$ | $CSNHCH_3$ |

Besonders hervorgehoben seien die Wirkstoffe mit den comnon names Propoxur, Cyflutherin, Flumethrin, Pyriproxyfen, Methoprene, Diazinon, Amitraz, Fenthion.

Die Wirkstoffe können in den Formkörpern allein oder in Mischung untereinander vorliegen.

Die Wirkstoffe liegen in den Formkörpern in Konzentrationen von 0,1 - 20 Gew.-% vor, bevorzugt zwischen 1 - 10 Gew.-%.

Die erfindungsgemäßen Formkörper können weiterhin die für Kunststoffe üblichen Additive enthalten. Übliche Additive sind beispielsweise Pigmente, Stabilisatoren, Fließmittel, Gleitmittel, Entformungsmittel.

Beispiele für übliche Additive sind:

1. Antioxidantien

1.1 Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol.

1.2 Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyl-oxyphenyl.

1.3 Hydroxylierte Thiodiphenylether, z.B. 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4 Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-(4-methyl-6(α-methylcyclohexyl)-phenol),2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Di-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan,

Ethylenglycol-bis-[3,3-bis-(3'-tert.butyl-4'-hydroxyphenyl)-butyrat],Di-(3-tert.butyl-4-hydroxy-5-methylphenyl)-dicyclopentadien, Di-[2-(3'-tert.butyl-2'-hydroxy-5'-methylbenzyl)-6-tert.butyl-4-methylphenyl]-terephthalat.

1.5 Benzylverbindungen, z.B. 1,3,5-Tri-(3,5-di-tert.butyl-4-hydroxybenzyl)-2,4,6-trimethylbenzol, Di-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)-dithiol-terephthalat,1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, 3,5-Di-tert.butyl-4-hydroxybenzyl-phosphonsäure-monoethylester, Calcium-Salz.

1.6 Acylaminophenole, z.B. 4-Hydroxy-laurinsäureanilid, 4-Hydroxystearinsäureanilid, 2,4-Bis-octylmercapto-6-)3,5-di-tert.butyl-4-hydroxyanilino)-s-triazin, N-(3,5-di-tert.butyl-4-hydroxyphenyl)-carbaminsäureoctylester.

1.7 Ester der $\beta$-(3,5-Di-tert.butyl-4-hydroxyphenyl)-propionsäure mit ein- oder mehrwertigen Alkoholen, wie z.B. Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyl-oxalsäurediamid.

1.8 Ester der $\beta$-(5-tert.butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyl-oxyalsäurediamid.

1.9 Amide der $\beta$-(3,5-Di-tert.butyl-4-hydroxyphenyl)-propionsäure, wie z.B. N,N'-Di-(3,5-di-tert.butl-4-hydroxyphenylpropionyl)-hexamethylendiamin, N,N'-(3,5-di-tert.butyl-4-hydroxyphenylpropionyl)-trimethylendiamin, N,N'-Di-(3,5-di-tert.butyl-4-hydroxyphenylpropionyl)-hydrazin.

2. UV-Absorber und Lichtschutzmittel

2.1 2-(2'-Hydroxyphenyl)-benztriazole, wie z.B. das 5'-Methyl-, 3',5'-Di-tert.butyl-, 5'-tert.butyl-, 5'-(1,1,3,3-Tetramethylbutyl)-,5-Chlor-3',5'-di-tert.butyl-, 5-Chlor-3'-tert.butyl-5'-methyl-, 3'-sec.butyl-5'-tert.butyl, 4'-Octoxy-, 3',5'-Di-tert.amyl-, 3',5'-Bis-($\alpha$,$\alpha$-dimethylbenzyl)-Derivat.

2.2 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydoxy-, 2'-Hydroxy-4,4'-dimethoxy-Derivat.

2.3 Ester von gegebenenfalls substituierten Benzoesäuren, wie z.B. 4-tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäure-hexadecylester.

2.4 Acrylate, wie z.B. $\alpha$-Cyan-$\beta$,$\beta$-diphenylacrylsäureethylester beziehungsweise -isooctylester, $\alpha$-Carbomethoxy-zimtsäuremethylester,$\alpha$-Cyano-$\beta$-methyl-p-methoxy-zimtsäuremethylester beziehungsweise -butylester, $\alpha$-Carbomethoxy-p-methoxy-zimtsäuremethylester, N-($\beta$-Carbomethoxy-$\beta$-cyanovinyl)-2-methylindolin.

2.5 Nickelverbindungen, wie z.B. Nickelkomplexe des 2,2'-Thio-bis-[4-(1,1,3,3-tetramethylbutyl)-phenols], wie der 1:1- oder 1:2-Komplex, gegebenenfalls mit zusätzlichen Liganden, wie n-Butylamin, Triethanolamin oder N-Cyclohexyl-diethanolamin, Nickeldibutyl-dithiocarbamat, Nickelsalze von 4-Hydroxy-3,5-di-tert.butylbenzyl-phosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6 Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichloro-1,3,5-s-triazin, Tris-(2,2,6,6-tetramethyl-4-piperidyl)-nitrotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethylpiperazinon).

2.7 Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid Gemische von o- und p-Methoxy-sowie von o- und p-Ethoxy-disubstituierten Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzylidenoxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5,5]undecan.

5. Peroxidzerstörende Verbindungen, wie z.B. Ester der $\beta$-Thiodipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-($\beta$-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und - hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die erfindungsgemäßen Formkörper werden durch Vermischen der Einzelkomponenten erhalten. Das Vermischen kann nach bekannten Techniken in jeglicher Weise erfolgen, z.B. über Kneter oder Schnekkenmaschinen. Die Weiterverarbeitung erfolgt durch die bekannten Techniken der Thermoplastverarbeitung, z.B. durch Extrusion oder Spritzguß.

Formkörper gemäß vorliegender Erfindung sind Halsbänder, Halsbandanhänger (Medaillons), Ohr-, Schwanz-, Fußbänder, Ohrmarken, Folien, Abziehfolien, Klebestreifen, Streifen, Platten, Granulate. Bevorzugt genannt seien Halsbänder und Medaillons für Hunde und Katzen.

Die Formkörper dienen zur Bekämpfung von Parasiten auf dem Wirtstier, am Wirtstier und in der Umgebung von Wirtstieren wie Haus-, Hobby- und Nutztieren.

Zu den Haus-, Hobby- und Nutztieren gehören Säugetiere wie z.B. Rinder, Schafe, Ziegen, Pferde, Schweine, Hunde, Katzen.

Zu den Schädlingen gehören:

Aus der Ordnung der Anoplura z.B. Haematopinus spp., Linognathus spp., Solenopotes spp., Pediculus spp., Pthirus spp.;

aus der Ordnung der Mallophaga z.B. Trimenopon spp., Menopon spp., Eomenacanthus spp., Menacanthus spp., Trichodectes spp., Felicola spp., Damalinea spp., Bovicola spp;

aus der Ordnung der Diptera z.B. Aedes spp., Culex spp., Simulium spp., Phlebotomus spp., Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cordylobia spp., Cochliomyia spp., Chrysomyia spp., Sarcophaga spp., Wohlfartia spp., Gasterophilus spp., Oesteromyia spp., Oedemagena spp., Hypoderma spp., Oestrus spp., Rhinoestrus spp., Melophagus spp., Hippobosca spp..

Aus der Ordnung der Siphonaptera z.B. Ctenocephalides spp., Echidnophaga spp., Ceratophyllus spp..

Aus der Ordnung der Metastigmata z.B. Hyalomma spp., Rhipicephalus spp., Boophilus spp., Amblyomma spp., Haemaphysalis spp., Dermacentor spp., Ixodes spp., Argas spp., Ornithodorus spp., Otobius spp.;

aus der Ordnung der Mesostigmata z.B. Dermanyssus spp., Ornithonyssus spp., Pneumonyssus spp..

Aus der Ordnung der Prostigmata z.B. Cheyletiella spp., Psorergates spp., Myobia spp., Demodex spp., Neotrombicula spp.;

aus der Ordnung der Astigmata z.B. Acarus spp., Myocoptes spp., Psoroptes spp., Chorioptes spp., Otodectes spp., Sarcoptes spp., Notoedres spp., Knemidocoptes spp., Neoknemidocoptes spp. Cytodites spp., Laminosioptes spp..

Die folgenden Beispiele für insektizide Formteile auf Basis Styrol – Butylen – Block – Copolymeren sollen die Erfindung erläutern ohne sie einzuschränken:

Beispiel A

Zusammensetzung:

| | |
|---|---|
| β – Cyfluthrin | 12,00 g |
| Styrol – Block – Copolymer (Thermolast K®) | 92,50 g |
| | 100,00 g |

Herstellung:

Die Mischung wird in herkömmlicher Weise zu Hundehalsbändern extrudiert.

Beispiel B

| | |
|---|---|
| β – Cyfluthrin | 10,00 g |
| Pyriproxifen | 0,35 g |
| Triacetin | 5,00 g |
| Styrol – Block – Copolymer (Thermolast K®) | 84,65 g |
| | 100,00 g |

Herstellung:

Die Wirkstoffe und Triacetin werden zusammen solange erhitzt, bis sich eine klare Lösung ergibt. Thermolast K wird in einem Mischer mit der warmen Lösung aus Wirkstoffen und Triacetin benetzt. Man mischt solange, bis die Mischung homogen ist. Dabei fördert Erwärmung der Mischung, z.B. infolge einer Erhöhung der Tourenzahl des Mischers, das Einziehen der Lösung in das Styrol – Block – Copolymer. Die Mischung wird auf einem Extruder zu Platten extrudiert, aus denen Medaillons (= Anhänger für Halsbänder) zu 2 x 4 cm ausgestanzt werden.

Beispiel C

Zusammensetzung:

| | |
|---|---|
| Propoxur | 7,50 g |
| Styrol – Block – Copolymer (Thermolast K®) | 92,50 g |
| | 100,00 g |

Herstellung:

Der Wirkstoff wird in einem Intensivmischer auf den Träger aufgebracht und die Mischung in Spritzguß zu Hundehalsbändern geformt.

**Patentansprüche**

1. Wirkstoffhaltige Formkörper dadurch gekennzeichnet, daß sie als Träger thermoplastische Elastomere auf Basis von Styrol – Butylen – Blockcopolymeren gegebenenfalls neben üblichen Zusätzen enthalten.

2. Verfahren zur Herstellung wirkstoffhaltiger Formkörper, dadurch gekennzeichnet, daß man thermoplastische Elastomere auf Basis von Styrol-Butylen-Blockcopolymeren mit Wirkstoffen und gegebenenfalls üblichen Zusätzen mischt und in üblicher Weise verarbeitet.

Europäisches Patentamt

# EUROPÄISCHER RECHERCHENBERICHT

Nummer der Anmeldung

EP 92 11 8735

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 338 821 (SECTO COMPANY LIMITED)<br>* Beispiel 1 *<br>* Ansprüche 1-7,10 *<br>--- | 1-2 | C08K5/00<br>C08L53/00<br>A01N25/10 |
| A | WO-A-8 602 006 (BAXTER TRAVENOL LABORATORIES)<br>* Seite 4, Zeile 8 *<br>* Seite 4, Zeile 13 *<br>* Anspruch 1 *<br>----- | 1-2 | |
| | | | RECHERCHIERTE SACHGEBIETE (Int. Cl.5) |
| | | | C08K<br>C08L<br>A01N |

Der vorliegende Recherchenbericht wurde für alle Patentansprüche erstellt

| Recherchenort | Abschlußdatum der Recherche | Prüfer |
|---|---|---|
| DEN HAAG | 09 FEBRUAR 1993 | SIEMENS T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)